# EUROPÄISCHE PATENTSCHRIFT

(11) **EP 0 769 342 B1**
(45) Veröffentlichungstag und Bekanntmachung des Hinweises auf die Patenterteilung: **07.08.2002**
(21) Anmeldenummer: 96116028.0
(22) Anmeldetag: 07.10.1996
(51) Int. Cl.: B23D 77/02

(54) **Werkzeug zur spanabtragenden Feinbearbeitung**
Precision tool
Outil de finition

(30) Priorität: 20.10.1995 DE 19539119
(43) Veröffentlichungstag der Anmeldung: 23.04.1997
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav, Dr.jur. Dipl.-Ing.

(56) Entgegenhaltungen:
- EP-A- 0 381 924
- DE-A- 3 022 984
- GB-A- 2 244 440

## Beschreibung

Die Erfindung betrifft ein Werkzeug zur spanabtragenden Feinbearbeitung von Bohrungsoberflächen gemäß Oberbegriff den Ansprüche 1. und 2; siehe DE-A 3022984,

Werkzeuge der hier angesprochenen Art, insbesondere Reibahlen sind bekannt. Es hat sich herausgestellt, daß in vielen Bearbeitungsfällen die Abfuhr der entstehenden Späne aus dem Bearbeitungsbereich nicht mit ausreichender Sicherheit erfolgt, so daß die bearbeitete Oberfläche Riefen und Rinnen aufweist und somit nicht der gewünschten Oberflächenqualität entspricht.

Es ist daher Aufgabe der Erfindung, ein Werkzeug zu schaffen, das diese Nachteile nicht aufweist.

Zur Lösung dieser Aufgabe wird ein Werkzeug vorgeschlagen, das die in Anspruch 1 oder 2 genannten Merkmale aufweist. Dadurch, daß ein im Bereich der aktiven Schneide der Messerplatte angeordneter Spanabweiser vorgesehen ist, der die von der Schneide ablaufenden Späne in Richtung einer die Späne aus dem Bearbeitungsbereich austragenden Kühl-/Schmiermittelströmung ablenkt, wird die Austragwirkung dieser Strömung unterstützt und ein praktisch vollständiger Abtransport der Späne gewährleistet. Auf diese Weise können diese die Oberfläche der bearbeiteten Bohrung nicht mehr beeinträchtigen.

Bevorzugt wird ein Ausführungsbeispiel des Werkzeugs, bei dem der Spanabweiser in den Grundkörper des Werkzeugs eingesetzt ist. Es ist also möglich, bei einem Verschleiß des Spanabweisers diesen auszutauschen.

Bevorzugt wird weiterhin ein Ausführungsbeispiel des Werkzeugs, bei dem der Spanabweiser Teil der die Messerplatte haltenden Spannpratze ist. Auch hier kann also der Spanabweiser bei Verschleiß ausgetauscht werden.

Weitere Ausgestaltungen ergeben sich aus den übrigen Unteransprüchen.

Die Erfindung wird im folgenden anhand der Zeichnung näher erläutert. Es zeigen:
- Figur 1: eine perspektivische Ansicht der Vorderseite eines Werkzeugs;
- Figur 2: eine perspektivische Ansicht einer Messerplatte mit einem ersten Ausführungsbeispiel einer Spannpratze und
- Figur 3: eine perspektivische Ansicht einer Messerplatte mit einer zweiten Ausführungsform einer Spannpratze.

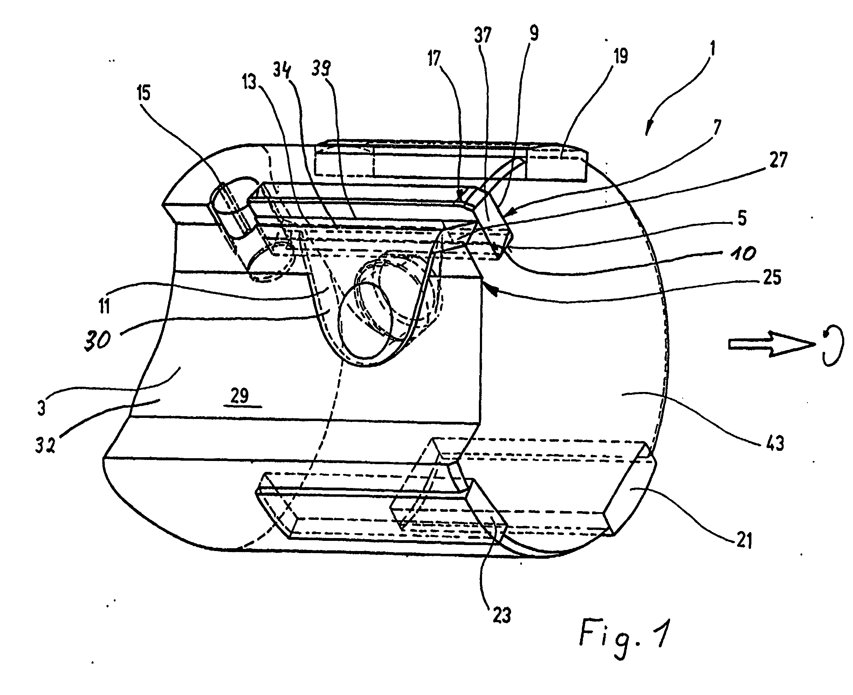

Das in Figur 1 dargestellte Werkzeug 1 wird zur Bearbeitung einer Bohrungsoberfläche in Rotation versetzt und in die zu bearbeitende Bohrung eingebracht. Grundsätzlich ist es auch möglich, eine Relativbewegung zwischen Werkzeug und Werkstück dadurch zu bewirken, daß das Werkstück gegenüber dem feststehenden Werkzeug in Rotation versetzt wird. Bei dem hier dargestellten Ausführungsbeispiel wird davon ausgegangen, daß das Werkzeug 1 in Vorschubrichtung, die wie in Figur 1 durch einen Pfeil gekennzeichnet ist, in das feststehende Werkstück eingebracht wird und sich dabei -in Vorschubrichtung gesehen- im Uhrzeigersinn dreht, was durch einen einfachen Pfeil in Figur 1 angedeutet ist.

Das Werkzeug 1 gemäß Figur 1 weist einen Grundkörper 3 auf, in dessen Umfangsfläche eine in axialer Richtung verlaufende Nut 5 zur Aufnahme einer Messerplatte 7 eingebracht ist. Die beiden sich in axialer Richtung ausdehnenden, im wesentlichen parallel verlaufenden Begrenzungsflächen der Nut 5 sind verschieden hoch. Die -in Drehrichtung gesehen- nacheilende Begrenzungsfläche 9 der Nut ist höher als die -in Drehrichtung gesehen- voreilende, gegenüberliegende Begrenzungsfläche 10. Durch eine Spannpratze 11 wird die in die Nut 5 eingesetzte Messerplatte 7 gegen die Begrenzungsfläche 9 angepreßt und sicher fixiert. Zur Befestigung der Messerplatte 7 kann -wie üblich- vorgesehen sein, daß die Spannpratze 11 in eine auf der Messervorderseite vorgesehene Spannkerbe 13 eingreift. Zur lagegenauen Fixierung der Messerplatte 7 kann hier noch ein in den Grundkörper 3 eingesetzter Anschlagstift 15 an dem -in Vorschubrichtung gesehenhinteren Ende der Messerplatte 7 vorgesehen sein.

Die aktive Schneide 17 der Messerplatte 7 überragt die Umfangsfläche des Grundkörpers 3. Die hier dargestellte Ausführungsform des Werkzeugs 1 ist mit drei Führungsleisten 19, 21 und 23 versehen, die das Werkzeug in der Bohrung führen und deren Anordnung und Funktion bekannt ist, so daß auf deren Beschreibung hier nicht weiter eingegangen wird.

Bei der Bearbeitung einer Bohrungsoberfläche dreht sich das Werkzeug 1 in der Bohrung -in der durch einen Pfeil angedeuten Vorschubrichtung gesehen- im Uhrzeigersinn, so daß die aktive Schneide 17 Späne von der Bohrungsoberfläche abtragen kann. Von der Schneide 17 ablaufende Späne treffen auf einen Spanabweiser 25.

Der Spanabweiser 25 ist hier Teil des Grundkörpers 3 des Werkzeugs 1. Der Spanabweiser 25 wird durch einen Vorsprung gebildet, der unmittelbar an der Vorderseite der in den Grundkörper 3 eingesetzten Messerplatte 7 vorgesehen ist und dessen der Messerplatte 7 zugewandte Oberfläche eine Fortsetzung der Begrenzungsfläche 10 bildet. Der als Vorsprung ausgebildete Spanabweiser 25 ragt also über die Oberkante der Begrenzungsfläche 10 -in radialer Richtung des Grundkörpers 3 gesehen- nach außen und springt gegenüber der oberen Begrenzungskante der Begrenzungsfläche 10 in Drehrichtung quasi vor. Er weist eine hier entgegen der Vorschubrichtung abfallende Spanabweisungsfläche 27 auf, die unterhalb der aktiven Schneide 17 und oberhalb der Spannpratze 11 angeordnet ist, so daß von der Schneide 17 abgetragene Späne auf die Spanabweisungsfläche 27 auftreffen und entgegen der Vorschubrichtung abgelenkt werden. Die von der Schneide 17 abgetragenen Späne gelangen somit in den Spanraum 29 und werden mit Hilfe einer hier nicht dargestellten Kühl-/Schmiermittelströmung aus der bearbeiteten Bohrung ausgetragen. Die Strömung verläuft in der Richtung, in die die Späne von der Spanabweisungsfläche abgelenkt werden.

Aus der Darstellung gemäß Figur 1 ist ersichtlich, daß zur Optimierung des Spanabflusses innerhalb des Spanraums 29 die Oberfläche 30 der Spannpratze 11 mit der Oberfläche 32 des Spanraums 29 zusammenfällt, so daß also die Spannpratze praktisch nicht in den Spanraum 29 vorsteht. Die der Befestigung der Messerplatte 7 dienende, auf der Messervorderseite aufliegende Kante der Spannpratze 11 verläuft parallel zur Spannkerbe 13 in einem Abstand zur radial außenstehenden Messerkante beziehungsweise Schneidkante der Messerplatte 7, der kleiner ist als der Abstand des Spanabweisers 25 zur außenstehenden Messerkante. Das heißt, der Spanabweiser 25 springt gegenüber der Kante 34 der Spannpratze 11 vor, so daß von der aktiven Schneide 17 ablaufende Späne zunächst auf den Spanabweiser 25 auflaufen, bevor sie -wenn überhaupt- auf die Oberfläche 30 der Spannpratze 11 auftreffen.

Bei dem hier dargestellten Ausführungsbeispiel liegt der höchste Punkt der abfallenden Spanabweisungsfläche 27 der aktiven Schneide 17 am nächsten, beziehungsweise reicht zumindest bis zu einer, in der Messervorderseite ausgebildeten Spanleitstufe 39. Der tiefste Punkt dieser abfallenden Spanabweisungsfläche 27 liegt in einer Höhe mit der Kante 34 der Spannpratze 11 . Es ist jedoch auch möglich, daß hier eine Stufe zur Spannpratze gegeben ist. Wesentlich ist, daß die Spanabweisungsfläche 27 als Auflauffläche für die von der aktiven Schneide 17 abgetragenen Späne dient und diese in Richtung der die Späne aus dem Bearbeitungsbereich austragenden Kühl-/Schmiermittelströmung ablenkt.

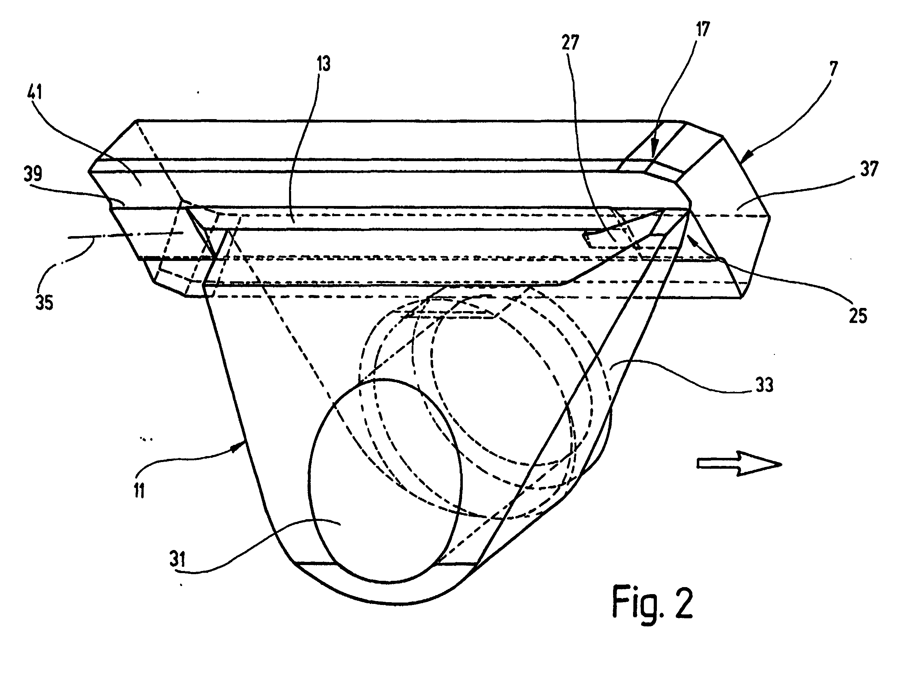

Figur 2 zeigt ein Detail aus Figur 1, nämlich eine Messerplatte 7 und eine Spannpratze 11, die wie üblich eine Bohrung 31 zur Aufnahme einer Spannschraube aufweist, die in den Grundkörper 3 des Werkzeugs 1 eingeschraubt wird.

Bei dem in Figur 2 dargestellten Ausführungsbeispiel ist die Spannpratze 11 mit einem Spanabweiser 25 versehen, der eine Spanabweisungsfläche 27 aufweist, die entgegen der durch einen Pfeil angedeuteten Vorschubrichtung geneigt ist und die von der aktiven Schneide 17 ablaufenden Späne entgegen der Vorschubrichtung ablenkt.

Der Spanabweiser 25 ist hier jedoch Teil des Grundkörpers 33 der Spannpratze 11, die hier einen über die in Figur 1 dargestellte Breite der Spannkerbe 13 hinausgehenden Vorsprung aufweist, der sich nach vorne in Vorschubrichtung und über die gedachte Mittellinie 35 der Messerplatte 7 hinaus nach oben in Richtung der aktiven Schneide 17 erstreckt.

Während üblicherweise die Spannpratze 11 so ausgebildet und angeordnet ist, daß sie den Ablauf der von der Schneide 17 abgetragenen Späne nicht behindert, ist also hier der von der Spannpratze 11 ausgehende Vorsprung vorgesehen, der den Spanabweiser 25 bildet und dazu dient, die von der Schneide ablaufenden Späne in eine gewünschte Richtung, hier entgegen der Vorschubrichtung, abzulenken.

Bei den in den Figuren 1 und 2 dargestellten Ausführungsbeispielen werden die Späne entgegen der Vorschubrichtung abgelenkt. Es wird dabei davon ausgegangen, daß in beiden Fällen eine entgegen der Vorschubrichtung verlaufende Kühl-/Schmiermittelströmung erzeugt wird, die die abgetragenen Späne aus dem Bearbeitungsbereich hinausführt und die insbesondere bei der Bearbeitung von Sacklöchern bevorzugt wird. Es wird also deutlich, daß bei den Ausführungsbeispielen der Figuren 1 und 2 die Austragwirkung dieser Strömung durch den Spanabweiser 25 unterstützt wird.

Den beiden in den Figuren 1 und 2 dargestellten Ausführungsformen des Spanabweisers 25 ist gemeinsam, daß sich dieser bis zur Stirnseite 37 der Messerplatte 7 erstreckt und über die Mittellinie 35 der Messerplatte 7 zumindest bis zu einer, in der Messervorderseite ausgebildeten, Spanleitstufe 39 reicht, die eine in die Messervorderseite eingebrachte Spanfläche 41 begrenzt, auf der die von der Schneide 17 abgetragenen Späne ablaufen.

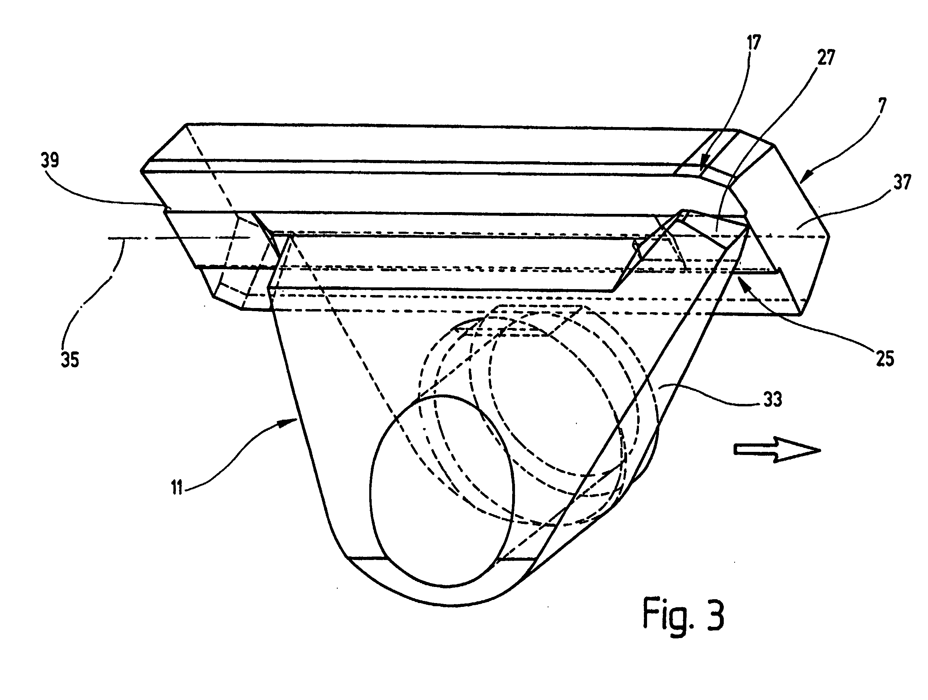

Figur 3 zeigt wiederum einen Ausschnitt eines Werkzeugs, nämlich eine Messerplatte 7 und eine Spannpratze 11, die einen als Vorsprung ausgebildeten Spanabweiser 25 aufweist, der Teil des Grundkörpers 33 der Spannpratze 11 ist. Der Spanabweiser reicht nach vorne bis zur Stirnseite 37 der Messerplatte 7. Er überragt auch hier die gedachte Mittellinie 35 der Messerplatte 7, außerdem die Spanleitstufe 39, bleibt jedoch unterhalb der aktiven Schneide 17. Der Spanabweiser 25 ist mit einer Spanabweisungsfläche 27 versehen, die hier in Richtung der durch einen Pfeil angedeuteten Vorschubrichtung bis zur Stirnseite 37 abfällt, so daß also die von der Schneide 17 ablaufenden Späne hier in Vorschubrichtung abgelenkt werden.

Das hier dargestellte Ausführungsbeispiel ist besonders für Bearbeitungsfälle geeignet, bei denen eine in Vorschubrichtung wirkende Kühl-/Schmiermittelströmung eingesetzt wird, was insbesondere bei der Bearbeitung von Durchgangsbohrungen der Fall ist.

Der Spanabweiser 25 des Ausführungsbeispiels gemäß Figur 3 zeichnet sich also dadurch aus, daß auch hier die von der Messerplatte 7 beziehungsweise der aktiven Schneide 17 von der Bohrungsoberfläche abgetragenen Späne in Richtung der Kühl-/Schmiermittelströmung abgelenkt werden, so daß deren Austragwirkung verbessert wird. Damit wird sichergestellt, daß keine Späne im Bearbeitungsbereich verbleiben, die die Oberflächenqualität und/oder die Maße der bearbeiteten Bohrung negativ beeinflussen könnten.

Den in den Figuren 2 und 3 dargestellten Ausführungsbeispielen ist gemeinsam, daß der Spanabweiser 25 bei einem Verschleiß der Spanabweisungsfläche 27 leicht austauschbar ist, indem die Spannpratze 11 ausgewechselt wird.

Bei dem in Figur 1 dargestellten Ausführungsbeispiel wird die Spanabweisungsfläche 27 vorzugsweise gehärtet, um den Verschleiß hier gering zu halten.

Denkbar ist es auch, ein Spanabweiserelement in den Grundkörper 3 des Werkzeugs 1 einzusetzen, das als Spanabweiser 25 wirkt und sich bis in den Ablaufbereich der von der Schneide 17 abgetragenen Späne beziehungsweise über die Spanleitstufe 39 erstreckt. Bei einer derartigen Ausgestaltung kann der Spanabweiser beziehungsweise das Spanabweiserelement bei einem Verschleiß ausgetauscht werden.

Schließlich ist es -insbesondere bei im Sinterverfahren hergestellten Messerplatten- möglich, auf der der Spannpratze 11 zugewandten Oberfläche der Messerplatte 7, also auf der auch als Messerbrust bezeichneten Messervorderseite, einen Spanabweiser vorzusehen, der eine Spanabweisungsfläche aufweist, die von der Schneide 17 abgetragene Späne vorzugsweise in Richtung einer Kühl-/Schmiermittelströmung ablenkt. Ein derartiger Spanabweiser auf der Vorderseite einer Messerplatte müßte etwa die Form der anhand der Figuren 1 bis 3 erläuterten Spanabweiser 25 aufweisen, um eine Ablenkung der Späne zu bewirken.

Die Kühl-/Schmiermittelströmung kann unabhängig von dem Werkzeug 1 erzeugt werden. Denkbar ist es ein Werkzeug zu verwenden, dessen Grundkörper 3 von einem Kühl-/Schmiermittelkanal durchdrungen wird, der im Spanraum 29 oder in der Stirnseite 43 des Werkzeugs 1 mündet. Der hier beschriebene Spanabweiser unterstützt also die Wirkung der Strömung, indem von der Schneide 17 abgetragene Späne in Richtung der Strömung abgelenkt werden können, sei es also in Vorschubrichtung (bei der Bearbeitung von Durchgangsbohrungen) oder entgegen der Vorschubrichtung (bei der Bearbeitung von Sacklochbohrungen).

## Patentansprüche

1. Werkzeug zur spanabhebenden Feinbearbeitung von Bohrungsoberflächen mit mindestens einer, eine Schneide (17) aufweisenden Messerplatte (7) und einem im Bereich der aktiven Schneide (17) der Messerplatte (7) vorgesehenen Spanabweiser (25), der die von der aktiven Schneide (17) ablaufenden Späne ablenkt, wobei der Spanabweiser (25) eine Spanabweisungsfläche (27) aufweist und über die Mittellinien (35) der Messerplatte (7) bis zu einer Spanleitstufe (39) reicht, die eine Spanfläche (41) begrenzt, auf der die von der Schneide (17) abgetragenen Späne ablaufen, **dadurch gekennzeichnet, dass** der Spanabweiser (25) eine entgegengesetzt zur oder in Vorschubrichtung des Werkzeugs (1) abfallende Spanabweisungsfläche (27) aufweist, dass die ablaufenden Späne in Richtung einer Kühl/Schmiermittelströmung abgelenkt werden und dass der Spanabweiser (25) als Vorsprung ausgebildet und in den Grundkörper (3) des Werkzeugs (1) eingesetzt oder Teil der Messerplatte (7) ist.

2. Werkzeug zur spanabhebenden Feinbearbeitung von Bohrungsoberflächen mit mindestens einer, eine Schneide (17) aufweisenden Messerplatte (7) und einem im Bereich der aktiven Schneide (17) der Messerplatte (7) vorgesehenen Spanabweiser (25), der die von der aktiven Schneide (17) ablaufenden Späne ablenkt, wobei der Spanabweiser (25) über die Mittellinie (35) der Messerplatte (7) bis zu einer Spanleitstufe (39) reicht, die eine Spanfläche (41) begrenzt, auf der die von der Schneide (17) abgetragenen Späne ablaufen, **dadurch gekennzeichnet, dass** der Spanabweiser (25) eine entgegengesetzt zur Vorschubrichtung des Werkzeugs (1) abfallende Spanabweisungsfläche (27) aufweist und dass die ablaufenden Späne in Richtung einer Kühl-/Schmiermittelströmung abgelenkt werden.

3. Werkzeug nach Anspruch 1, **dadurch gekennzeichnet, dass** der Spanabweiser (25) Teil des Grundkörpers (3) des Werkzeugs (1) ist.

4. Werkzeug nach Anspruch 1, **dadurch gekennzeichnet, dass** der Spanabweiser (25) Teil einer die Messerplatte (7) haltenden Spannpratze (11) ist.

5. Werkzeug nach einem der vorhergehenden Ansprüche, **dadurch gekennzeichnet, dass** der Spanabweiser (25) eine Spanleitstufe (39) der Messerplatte (7) überragt.

6. Werkzeug nach einem der vorhergehenden Ansprüche, **dadurch gekennzeichnet, dass** das Werkzeug (1) mit einem Kühl-/Schmiermittelkanal versehen ist, der sich vorzugsweise nahe der Messerplatte (7) öffnet.

## Claims

1. A tool for chip-removing fine machining of bore surfaces with at least one tool bit plate (7) having a cutting edge (17) and a swarf deflector (25) provided in the region of the active cutting edge (17) of the tool bit plate (7), which deflects the swarf leaving the active cutting edge (17), wherein the swarf deflector (25) has a swarf deflecting surface (27) and extends beyond the centre line (35) of the tool bit plate (7) up to a swarf guiding step (39), which delimits a swarf surface (41) on which the swarf removed by the cutting edge (17) runs off, **characterized in that** the swarf deflector (25) has a swarf deflecting surface (27) receding opposite to the feed direction of the tool (1), **in that** the leaving swarf is deflected in the direction of a coolant/lubricant flow and **in that** the swarf deflector (25) is formed as a projection and is fitted in the body (3) of the tool (1) or is a part of the tool bit plate (7).

2. A tool for chip-removing fine machining of bore surfaces with at least one tool bit plate (7) having a cutting edge (17) and a swarf deflector (25) provided in the region of the active cutting edge (17) of the tool bit plate (7), which deflects the swarf leaving the active cutting edge (17), wherein the swarf deflector (25) extends beyond the centre line (35) of the tool bit plate (7) up to a swarf guiding step (39), which delimits a swarf surface (41) on which the swarf removed by the cutting edge (17) runs off, **characterized in that** the swarf deflector (25) has a swarf deflecting surface (27) receding opposite to the feed direction of the tool (1) and **in that** the leaving swarf is deflected in the direction of a coolant/lubricant flow.

3. A tool according to claim 1, **characterized in that** the swarf deflector (25) is a part of the body (3) of the tool (1).

4. A tool according to claim 1, **characterized in that** the swarf deflector (25) is a part of a clamping shoe (11) holding the tool bit plate (7).

5. A tool according to any of the preceding claims, **characterized in that** the swarf deflector (25) projects beyond a swarf guiding step (39) of the tool bit plate (7).

6. A tool according to any of the preceding claims, **characterized in that** the tool (1) is provided with a coolant/lubricant channel which preferably opens near to the tool bit plate (7).

## Revendications

1. Outil de finition par enlèvement de copeaux pour des surfaces de perçages avec au moins un porte-couteau (7) présentant une lame (17) et un rejette-copeaux (25), prévu dans la zone de la lame (17) active du porte-couteau (7), qui dévie les copeaux se déroulant de la lame (17) active, le rejette-copeaux (25) présentant une surface de rejet des copeaux (27) et parvenant par-dessus les lignes médianes (35) du porte-couteau (7) jusqu'à un gradin de guidage de copeaux (39) qui limite une surface de copeaux (41) sur laquelle les copeaux retirés par la lame (17) se déroulent,
**caractérisé en ce que**
le rejette-copeaux (25) présente une surface de rejet des copeaux (27) inclinée de façon opposée à la direction d'avancée de l'outil (1), les copeaux qui se déroulent sont déviés en direction d'un courant de matière refroidissante ou lubrifiante et le rejette-copeaux (25) est formé en tant que saillie et est introduit dans le corps de base (3) de l'outil (1), ou fait partie du porte-couteau (7).

2. Outil de finition par enlèvement de copeaux pour des surfaces forées avec au moins un porte-couteau (7) présentant une lame (17) et un rejette-copeaux (25), prévu dans la zone de la lame (17) active du porte-couteau (7), qui dévie les copeaux se déroulant de la lame (17) active, le rejette-copeaux (25) parvenant par-dessus la ligne médiane (35) du porte-couteau (7) jusqu'à un gradin de guidage de copeaux (39) qui limite une surface de copeaux (41) sur laquelle les copeaux retirés par la lame (17) se déroulent,
**caractérisé en ce que**
le rejette-copeaux (25) présente une surface de rejet des copeaux (27) inclinée de façon opposée à la direction d'avancée de l'outil (1) et les copeaux qui se déroulent sont déviés en direction d'un courant de matière refroidissante ou lubrifiante.

3. Outil selon la revendication 1,
**caractérisé en ce que**
le rejette-copeaux (25) est une partie du corps de base (3) de l'outil (1).

4. Outil selon la revendication 1,
**caractérisé en ce que**
le rejette-copeaux (25) est une partie d'une griffe de serrage (11) qui maintient le porte-couteau (7).

5. Outil selon l'une des revendications précédentes,
**caractérisé en ce que**
le rejette-copeaux (25) surplombe un gradin de guidage de copeaux (39) du porte-couteau (7).

6. Outil selon l'une des revendications précédentes,
**caractérisé en ce que**
l'outil (1) est muni d'un canal pour une matière refroidissante ou lubrifiante qui s'ouvre de préférence à proximité du porte-couteau (7).
